# EUROPEAN PATENT SPECIFICATION

(11) **EP 3 835 611 B1**
(45) Date of publication and mention of the grant of the patent: **03.01.2024**
(21) Application number: 20210273.7
(22) Date of filing: 27.11.2020
(51) Int. Cl.: F16D 55/00, D05B 69/12, H02K 7/102, H02K 7/11, F16D 65/18

(54) **A MOTOR AND A MOTOR MOUNTING METHOD**
EINE MOTOR- UND EINE MOTOR-MONTAGEMETHODE
UN MOTEUR ET UN PROCÉDÉ DE MONTAGE DE MOTEUR

(30) Priority: 13.12.2019 TR 201920227
(43) Date of publication of application: 16.06.2021
(73) Proprietor: Arçelik Anonim Sirketi, 34445 Istanbul (TR)
(72) Inventor: GUNERI, Serhat, 34445 Istanbul (TR); ISIKVEREN, Ugur, 34445 Istanbul (TR)

(56) References cited:
- DE-A1-102010 054 920
- US-A- 5 050 711

## Description

The present invention relates to a special purpose servo motor with an electromagnetic brake.

Special purpose servo motors are usually produced with electromagnetic brakes. In the state of the art several embodiments have been developed to facilitate and shorten the mounting process of the brake. During the mounting process, the bolts used as fixing members dislodge while the brake is being guided to the brake gear. Difficulty is experienced in the guiding of the brake to the brake gear. During the mounting of the brake to the motor, it is very difficult to hold together the manual brake mechanism parts which pass through the brake. Furthermore, while the brake is being guided and fitted to the brake gear, passing the power cables of the brake through the housing of the motor body creates difficulties and problems in the mounting of the motor.

In the state of the art United States Patent No. US5050711, the fixing of the electromagnetic brake coupled with the motor shaft is disclosed. In this document, the electronic brake housing is fixed to a bracket. In the state of the art German Patent Application No. DE102010054920, a roller drive comprising a motor and a brake mechanism is disclosed.

The aim of the present invention is the realization of a special purpose servo motor with an electromagnetic brake.

The motor realized in order to attain the aim of the present invention, explicated in the first claim and the respective claims thereof, comprises a brake pull mechanism, a table whereon the brake pull mechanism is disposed, a brake mechanism which is fixed onto the table so as to surround the brake pull mechanism placed onto the table, and a mounting member which is positioned on the table so as to surround the brake mechanism and the brake pull mechanism from outside, which enables the brake mechanism and the brake pull mechanism to be guided to each other and which comprises a slit allowing the passage of the power cables of the brake mechanism, wherein said components are grouped together.

The mounting member is in the form of a hollow cylinder and has an upside down U-shaped slit on the side wall thereon. In the embodiment of the present invention, the slit is a quadrangle and a cut-out in the form of an upside down "U" provided on the quadrangle integrated to the mounting member.

The table comprises a circular base and a plurality of, preferably three, circular steps on the base, each having a smaller diameter than that of the one below. The table is in the form of a pyramid with a circular base.

The motor casing is in the form of a quadrangular prism and has a hole at a point close to the ceiling so as to align with the slit on the mounting member when the brake mechanism is mounted thereon. Thus, during the mounting process, the power cables which pass through the slit on the mounting member also pass through the hole, thus ensuring the electrical connection of the motor in a easy and quick manner. Thereby, during the mounting of the motor, the power cables are enabled to be taken out without being crushed and without being subject to other negative impacts, and the electrical connection of the motor is performed.

The motor of the present invention is mounted as follows. The brake pull mechanism is placed onto the table so as to be on the step on the table with the smallest diameter. Then, the break mechanism is fixed onto the table so as to surround the brake pull mechanism placed onto the table. And then, the mounting member is placed temporarily onto base of the table so as to surround the break mechanism and the brake pull mechanism from outside. In this case, the cables are passed through the slit on the outer wall of the mounting member. The power cables which extend out from the slit on the mounting member are also passed through the hole on the motor casing, and the motor casing is fixedly attached such that the mounting member is positioned between the motor casing and the brake mechanism. Lastly, the mounting member between the brake mechanism and the motor casing is removed and the mounting process is completed.

By means of the present invention, the brake mechanism is enabled to be mounted onto the motor correctly and quickly and mounting of the motor is enabled to be performed quickly and precisely. By using the mounting member, the fixing members used while the brake mechanism and the brake pull mechanism are guided to each other are prevented from dislodging. Thus, the difficulties experienced during the guiding process are eliminated. Furthermore, the power cables are enabled to be passed through the motor casing easily and quickly without being damaged.

The motor realized in order to attain the aim of the present invention is illustrated in the attached figures, where:
Figure 1 - is the perspective view of a brake pull mechanism.
Figure 2 - is the perspective view of a table.
Figure 3 - is the perspective view of the brake pull mechanism placed onto the table.
Figure 4 - is the perspective view of the brake mechanism fixed onto the table and the brake pull mechanism.
Figure 5 - is the perspective view of a mounting member.
Figure 6 - is the perspective view of the mounting member placed onto the brake mechanism.
Figure 7 - is the perspective view of the motor casing wherein the brake mechanism and the mounting member are attached thereon.
Figure 8 - is the perspective view of the motor the mounting of which is completed by removing the mounting member.

The elements illustrated in the figures are numbered as follows:
1. Motor
2. Motor casing
3. Table
4. Brake pull mechanism
5. Brake mechanism
6. Mounting member
7. Slit
8. Cut-out
9. Hole
10. Base
11. Step

The motor (1) comprises a brake pull mechanism (4), a table (3) whereon the brake pull mechanism (4) is placed, a brake mechanism (5) which is fixed onto the table (3) so as to surround the brake pull mechanism (4) placed onto the table (3), a mounting member (6) which is positioned on the table (3) so as to surround the brake mechanism (5) and the brake pull mechanism (4) from outside, which enables the brake mechanism (5) and the brake pull mechanism (4) to be guided to each other and which comprises a slit (7) allowing the passage of the power cables of the brake mechanism (5).

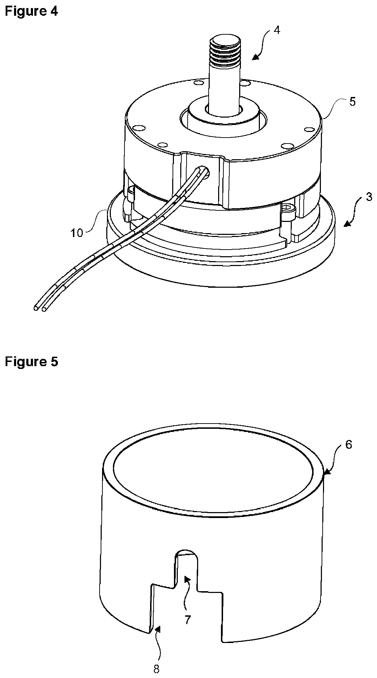

The mounting member (6) is in the form of a hollow cylinder and has an upside down U-shaped slit (7) on the side wall thereon. In the embodiment of the present invention, the mounting member (6) further comprises a quadrilateral cut-out (8) which adjoins the base of the mounting member (6) at the bottom edge thereof and the slit (7) at the upper edge thereof. The cut-out (8) enables the power cables of the mounting member (6) to be taken out easily without getting stuck (Figure 5).

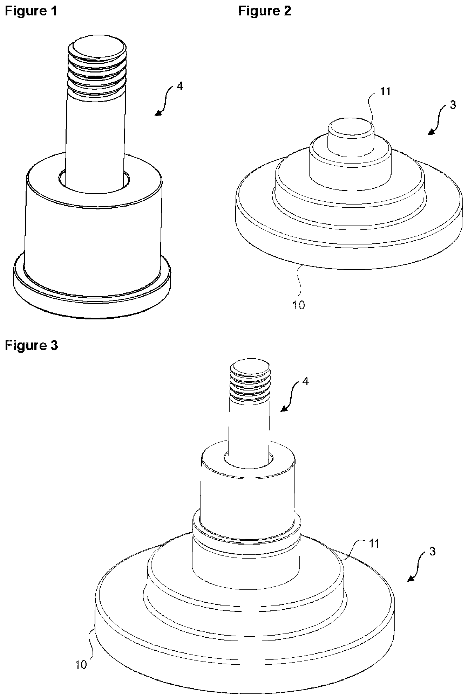

The table (3) comprises a circular base (10) and a plurality of, preferably three, circular steps (11) on the table (10), each having a smaller diameter than that of the one below. The table (3) is in the form of a pyramid with a circular base (10) (Figure 2).

The motor casing (2) is in the form of a quadrangular prism and has a hole (9) at a point close to the ceiling thereof so as to align with the slit (7) on the mounting member (6) when the brake mechanism (5) is mounted thereon. Thus, during the mounting process, the power cables which passes through the slit (7) on the mounting member (6) also passes through the hole (9), providing the electrical connection of the motor (1) in a quick and easy manner. Thereby, during the mounting of the motor (1), the power cables are enabled to be taken out without being crushed and without being subject to other negative impacts, and the electrical connection of the motor (1) is provided.

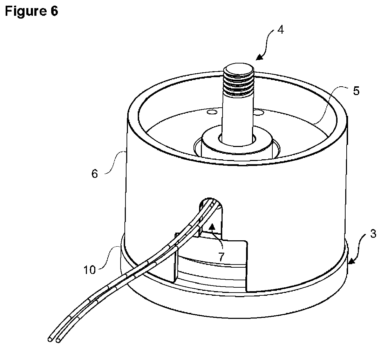

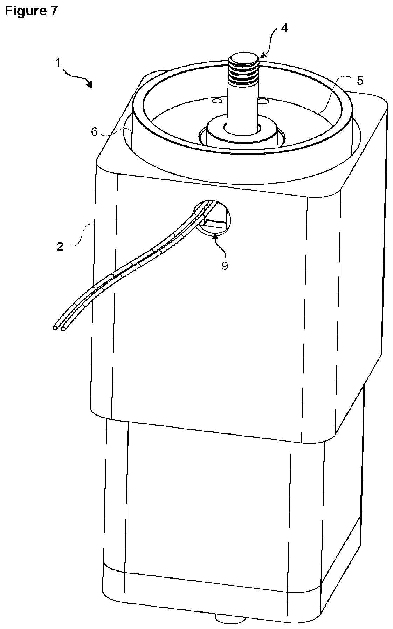

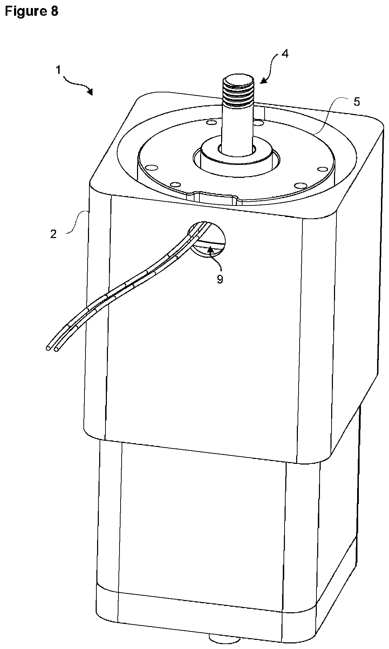

The motor (1) of the present invention is mounted as follows. The brake pull mechanism (4) is placed onto the table (3) so as to be on the step (11) on the table having the smallest diameter (Figure 1 and Figure 3). Then, the break mechanism (5) is fixed onto the table (3) so as to surround the brake pull mechanism (4) placed onto the table (3) (Figure 4). Afterwards, the mounting member (6) is placed temporarily onto base (10) of the table (3) so as to surround the break mechanism (5) and the brake pull mechanism (4) from outside (Figure 6). In this case, the power cables are passed through the slit (7) on the outer wall of the mounting member (6). The power cables which extend out from the slit (7) on the mounting member (6) are also passed through the hole (9) on the motor casing (2) and the motor casing (2) is fixedly attached such that the mounting member (6) is positioned between the motor casing (2) and the brake mechanism (5) (Figure 7). Lastly, the mounting member (6) between the brake mechanism (5) and the motor casing (2) is removed and the mounting process is completed (Figure 8).

The motor (1) mounting method of the present invention suitable for the motor (1) explicated above comprises the steps of placing the brake pull mechanism (4) onto the table (3) onto the top step (11) on the table (3) having the smallest diameter, fixing the brake mechanism (5) onto the table (3) so as to surround the brake pull mechanism (4) placed onto the table (3), placing the mounting member (6) temporarily onto the base (10) of the table (3) so as to surround the brake mechanism (5) and the brake pull mechanism (4) from outside, passing the power cables through the slit (7) on the outer wall of the mounting member (6) and through the hole (9) on the motor casing (2), fixedly attaching the motor casing (2) such that the mounting member (6) is positioned between the motor casing (2) and the brake mechanism (5), and pulling and removing the mounting member (6) from between the brake mechanism (5) and the motor casing (2).

By means of the present invention, the brake mechanism (5) is enabled to be mounted onto the motor (1) correctly and quickly, performing the mounting of the motor (1) in a quick and precise manner. By using the mounting member (6), the fixings member used while guiding the brake mechanism (5) and the brake pull mechanism (4) to each other are prevented from dislodging. Thus, the difficulties experienced during the guiding process are eliminated. Furthermore, the power cables are enabled to be passed through the motor casing (2) easily and quickly without being damaged.

## Claims

1. A motor (1) **comprising** a brake pull mechanism (4), a table (3) whereon the brake pull mechanism (4) is placed, a brake mechanism (5) which is fixed onto the table (3) so as to surround the brake pull mechanism (4) placed onto the table (3), a mounting member (6) which is positioned on the table (3) so as to surround the brake mechanism (5) and the brake pull mechanism (4) from outside, which enables the brake mechanism (5) and the brake pull mechanism (4) to be guided to each other and which comprises a slit (7) allowing the passage of the power cables of the brake mechanism (5) **characterized by** the table (3) comprising a circular base (10) and a plurality of circular steps (11) on the table (10), each having a smaller diameter than that of the one below.

2. A motor (1) as in Claim 1, **characterized by** the mounting member (6) which is in the form of a hollow cylinder and has an upside down U-shaped slit (7) on the side wall thereon.

3. A motor (1) as in Claim 1 and 2, **characterized by** the mounting member (6) comprising a quadrilateral cut-out (8) which adjoins the base of the mounting member (6) at the bottom edge thereof and the slit (7) at the upper edge thereof.

4. A motor (1) as in Claim 1, **characterized by** the table (3) comprising three circular steps (3).

5. A motor (1) as in Claim, 4, **characterized by** the table (3) which is in the form of a pyramid having a circular base.

6. A motor (1) as in Claim 1, 2 and 3, **characterized by** the motor casing (2) which is in the form of a quadrangular prism and has a hole (9) at a point close to the ceiling thereof so as to align with the slit (7) on the mounting member (6) when the brake mechanism (5) is mounted thereon.

## Patentansprüche

1. Ein Motor (1) **umfasst** einen Bremszugmechanismus (4), einen Tisch (3), auf dem der Bremszugmechanismus (4) angeordnet ist, einen Bremsmechanismus (5), der auf dem Tisch (3) so befestigt ist, dass er den auf dem Tisch (3) angeordneten Bremszugmechanismus (4) umgibt, ein Montageelement (6), das auf dem Tisch (3) so angeordnet ist, dass es den Bremsmechanismus (5) und den Bremszugmechanismus (4) von außen umgibt, das es dem Bremsmechanismus (5) und dem Bremszugmechanismus (4) ermöglicht, zueinander geführt zu werden, und das einen Schlitz (7) aufweist, der den Durchgang der Stromkabel des Bremsmechanismus (5) ermöglicht, **gekennzeichnet ist es dadurch,** dass der Tisch (3) eine kreisförmige Basis (10) und eine Vielzahl von kreisförmigen Stufen (11) auf dem Tisch (3) aufweist, von denen jede einen kleineren Durchmesser hat als die darunter liegende.

2. Ein Motor (1), wie in Anspruch 1 aufgeführt, **ist dadurch gekennzeichnet, dass** das Montageelement (6) die Form eines Hohlzylinders hat und an der Seitenwand einen umgedrehten U-förmigen Schlitz (7) aufweist.

3. Ein Motor (1), wie in Anspruch 1 und 2 aufgeführt, **ist dadurch gekennzeichnet, dass** das Montageelement (6) einen viereckigen Ausschnitt (8) aufweist, der an der Unterkante des Montageelements (6) an dessen Grundfläche und an dessen Oberkante an den Schlitz (7) angrenzt.

4. Ein Motor (1), wie in Anspruch 1 aufgeführt, **ist dadurch gekennzeichnet, dass** der Tisch (3) drei kreisförmige Stufen (3) umfasst.

5. Ein Motor (1), wie in Anspruch 5 aufgeführt, **ist dadurch gekennzeichnet, dass** der Tisch (3) die Form einer Pyramide mit kreisförmiger Grundfläche hat.

6. Ein Motor (1), wie in Anspruch 1, 2 und 3 aufgeführt, **ist dadurch gekennzeichnet, dass** das Motorgehäuse (2), das die Form eines viereckigen Prismas hat und ein Loch (9) an einem Punkt in der Nähe der Decke desselben aufweist, so dass es mit dem Schlitz (7) auf dem Montageelement (6) fluchtet, wenn der Bremsmechanismus (5) darauf montiert ist.

## Revendications

1. Un moteur (1) **comprenant** un mécanisme de traction de frein (4), une table (3) sur laquelle est placé le mécanisme de traction de frein (4), un mécanisme de frein (5) qui est fixé sur la table (3) de manière à entourer le mécanisme de traction de frein (4) placé sur la table (3), un élément de montage (6) qui est positionné sur la table (3) de manière à entourer le mécanisme de frein (5) et le mécanisme de traction de frein (4) de l'extérieur, qui permet de guider le mécanisme de freinage (5) et le mécanisme de traction de frein (4) l'un vers l'autre et qui comporte une fente (7) permettant le passage des câbles d'alimentation du mécanisme de freinage (5) **caractérisé par le fait que** la table (3) comporte une base circulaire (10) et une pluralité de marches circulaires (11) sur la table (10), chacune ayant un diamètre inférieur à celui de la marche du dessous.

2. Un moteur (1) selon la déclaration 1, **caractérisé par** l'élément de montage (6) qui a la forme d'un cylindre creux et présente une fente en forme de U renversé (7) sur la paroi latérale de celui-ci.

3. Un moteur (1) selon les déclarations 1 et 2, **caractérisé par le fait que** l'élément de montage (6) comprend une découpe quadrilatérale (8) qui jouxte la base de l'élément de montage (6) au niveau de son bord inférieur et la fente (7) au niveau de son bord supérieur.

4. Un moteur (1) selon la déclaration 1, **caractérisé par le fait que** la table (3) comprend trois marches circulaires (3).

5. Un moteur (1) comme dans la déclaration, 4, **caractérisé par** la table (3) qui est en forme d'une pyramide ayant une base circulaire.

6. Un moteur (1) comme dans la déclaration 1, 2 et 3, **caractérisé par** le boîtier du moteur (2) qui est en forme de prisme quadrangulaire et a un trou (9) à un point proche de son plafond de manière à s'aligner avec la fente (7) sur l'élément de montage (6) lorsque le mécanisme de freinage (5) est monté sur celui-ci.
